# DEMANDE DE BREVET EUROPEEN

(11) **EP 3 385 566 A1**
(43) Date de publication de la demande: **10.10.2018**
(21) Numéro de dépôt: 18166134.9
(22) Date de dépôt: 06.04.2018
(51) Int. Cl.: F16F 9/342, F16F 9/512, F16F 9/516

(54) **DISPOSITIF DE SUSPENSION ADAPTATIVE RÉGLABLE PAR SYSTÈME DE DÉCHARGE À POINTEAU**

(30) Priorité: 07.04.2017 FR 1753041
(71) Demandeur: Bossard, Olivier, 31240 Saint Jean (FR)
(72) Inventeur: BOSSARD, Olivier, 31240 SAINT JEAN (FR)
(74) Mandataire: Ipside

(57) **Abrégé**

La présente invention se rapporte à un dispositif de suspension (100, 200) de véhicule formé par un amortisseur (10, 210) et un ressort hélicoïdal (20) montés en parallèle, l'amortisseur et le ressort étant coaxiaux, ledit amortisseur comportant au moins un corps (11a, 11b) délimitant au moins une cavité (12a, 12b) cylindrique dans laquelle coulisse un piston (13) solidaire d'une tige de piston (131), et un dispositif de décharge comprenant un conduit (14) traversant axialement ledit piston, un gicleur (15) à une extrémité dudit conduit et un pointeau (16, 216) pour limiter le débit à la sortie dudit gicleur. Des moyens élastiques agissent sur le pointeau pour maintenir le gicleur fermé en position statique, une force exercée par lesdits moyens élastiques étant déterminée pour que le pointeau s'ouvre quand un fluide traversant le conduit exerce une pression sur ledit pointeau, la course d'ouverture dudit pointeau étant fonction de la pression exercée par le fluide traversant le conduit.

## Description

### DOMAINE DE L'INVENTION

La présente invention appartient au domaine des systèmes de suspension et d'amortissement de véhicules, elle concerne plus particulièrement un dispositif de suspension adaptative muni d'un pointeau de réglage de compression.

L'invention est principalement destinée aux véhicules de compétition sportive mais reste néanmoins adaptée à toute autre véhicule pouvant être équipé de systèmes de suspension adaptative.

### ÉTAT DE LA TECHNIQUE

Un système de suspension de véhicule roulant désigne tout ensemble formé par l'agencement en parallèle d'un ressort, assurant la suspension à proprement parler, et d'un amortisseur hydraulique par exemple limitant les oscillations dudit ressort induites par le mouvement du véhicule et assurant dans certaines formes une suspension auxiliaire.

Ainsi, un système de suspension permet, dans un véhicule roulant, de relier une masse non suspendue (typiquement une roue et ses organes de freinage) aux masses suspendues (typiquement un châssis de véhicule automobile et les éléments qu'il supporte ou un cadre de cycle) afin de maintenir au maximum un contact permanent entre le véhicule et le sol tout en limitant l'amplitude des oscillations lorsque celui-ci roule sur un sol irrégulier ou accidenté.

En effet, lorsqu'une roue d'un véhicule subit un choc, le couple ressort amortisseur constituant le système de suspension absorbe en grande partie l'énergie du choc en se comprimant. L'amortisseur freine ensuite la détente du ressort en dissipant son énergie.

Un système de suspension favorise donc la stabilité d'un véhicule au cours de son mouvement, facilite la conduite et améliore le confort des passagers du véhicule.

Par conséquent, Il s'avère nécessaire d'équiper un véhicule d'un système de suspension adapté à l'utilisation dudit véhicule.

Dans la suite, il est uniquement fait référence aux systèmes de suspension à amortisseur hydraulique et ressort hélicoïdal.

Dans le domaine de la compétition sportive, il est nécessaire de pouvoir adapter les systèmes de suspension du véhicule en fonction de la problématique rencontrée, notamment une modification des paramètres du véhicule (charge, pneumatique, répartition des masses, etc.), des conditions d'utilisation (conditions météorologiques, type de terrain, etc.) ou du comportement dynamique du véhicule (problème de survirage et sous-virage, mauvais maintien de caisse, etc.). Telle est la fonction du dispositif de suspension réglable.

En effet, quelle que soit la conception d'un amortisseur hydraulique, c'est-à-dire qu'il s'agisse d'un amortisseur à une, deux, trois ou quatre voies, voire d'autres conceptions, il comprend nécessairement un corps cylindrique creux empli d'une huile le plus souvent, dans lequel coulisse une tige. Des moyens de décharge sont agencés au sein de l'amortisseur et sont configurés pour séparer le fluide dans plusieurs chambres à volumes et pressions variables et pour absorber l'énergie lors d'une détente ou d'une compression de l'amortisseur. Ainsi, les moyens de décharge permettent de ramener l'amortisseur dans une position d'équilibre en absorbant l'énergie. Ces moyens de décharge sont configurés notamment pour constituer plusieurs circuits hydrauliques lors du fonctionnement de l'amortisseur, qui peuvent être de plusieurs types connus de l'homme du métier.

Sur un amortisseur réglable, il est connu d'utiliser un dispositif de décharge mis en oeuvre par un pointeau fixe qui permet d'assurer un débit réglable grâce à un réglage de la position du pointeau. A titre d'exemple, un tel système de décharge est décrit dans le brevet européen EP 1 989 464 B1.

Un inconvénient de ce système réside dans l'impossibilité de régler précisément et efficacement le système de décharge sur toute la plage de réglage de la position du pointeau.

### PRÉSENTATION DE L'INVENTION

La présente invention se propose de palier les limitations de l'art antérieur et présente un dispositif de suspension de véhicule formé d'un amortisseur et d'un ressort hélicoïdal montés en parallèle, l'amortisseur et le ressort étant coaxiaux, ledit amortisseur comportant au moins un corps délimitant au moins une cavité cylindrique dans laquelle coulisse un piston solidaire d'une tige de piston, et un dispositif de décharge comprenant un conduit traversant axialement ledit piston, un gicleur à une extrémité dudit conduit et un pointeau pour limiter le débit à la sortie dudit gicleur.

Le dispositif de suspension selon l'invention est remarquable en ce que des moyens élastiques agissent sur le pointeau pour maintenir le gicleur fermé en position statique, une force exercée par lesdits moyens élastiques étant déterminée pour que le pointeau s'ouvre quand un fluide traversant le conduit exerce une pression sur ledit pointeau, la course d'ouverture dudit pointeau étant fonction de la pression exercée par le fluide traversant le conduit.

Avantageusement, la tige de piston comporte au moins un orifice latéral permettant au fluide provenant du gicleur d'emplir une partie de la cavité en aval du piston pour diminuer la pression dans une partie de ladite cavité en amont dudit piston.

Selon un principe fondamental de l'invention, le pointeau est soumis à un effort de compression de sens opposé à la pression du fluide provenant du conduit et permettant de maintenir ledit pointeau en position fermée du gicleur en dessous d'un seuil de pression exercée par le fluide dudit conduit.

Selon un mode de réalisation, l'effort de compression opposé à la pression du fluide du conduit auquel est soumis le pointeau est exercé par un gaz comprimé contenu dans un tube de commande disposé à l'intérieur de la tige de piston.

Selon un autre mode de réalisation, l'effort de compression opposé à la pression du fluide du conduit auquel est soumis le pointeau est exercé par un ressort agencé pour comprimer ledit pointeau entre une tige de commande et le gicleur.

De façon avantageuse, l'amortisseur comporte un système de ressort auxiliaire permettant d'augmenter la sensibilité dudit amortisseur au delà d'une sensibilité maximale obtenue par le dispositif de décharge seul, ledit système de ressort auxiliaire comportant un ressort de compression disposé entre le piston et une tige d'appui creuse entourant la tige de piston, ledit ressort de compression et ladite tige d'appui étant coaxiaux à ladite tige de piston.

De plus, le piston comporte des moyens calibrés de passage du fluide entre les deux parties de la cavité séparées par ledit piston, et des clapets qui ferment et ouvrent lesdits moyens calibrés en fonction des pressions dans les deux parties de la cavité.

Selon un mode e réalisation préféré, l'amortisseur du dispositif de suspension est un amortisseur hydraulique.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un dispositif de suspension conforme aux principes de l'invention.

### BRÈVE DESCRIPTION DES FIGURES

Les différents dessins ainsi que les éléments d'un même dessin, ne sont pas nécessairement représentés à la même échelle. Sur l'ensemble des dessins, les éléments identiques portent le même repère.

Il est ainsi illustré en :
Fig. 1 une vue partielle en coupe longitudinal d'un dispositif de suspension selon un premier mode de réalisation de l'invention ;
Fig. 2 une vue d'un détail de la figure 1 ;
Fig. 3 une vue partielle en coupe longitudinal d'un dispositif de suspension selon un deuxième mode de réalisation de l'invention ;
Fig. 4 une vue d'un détail de la figure 3.

### DESCRIPTION DÉTAILLÉE DE MODES DE RÉALISATION

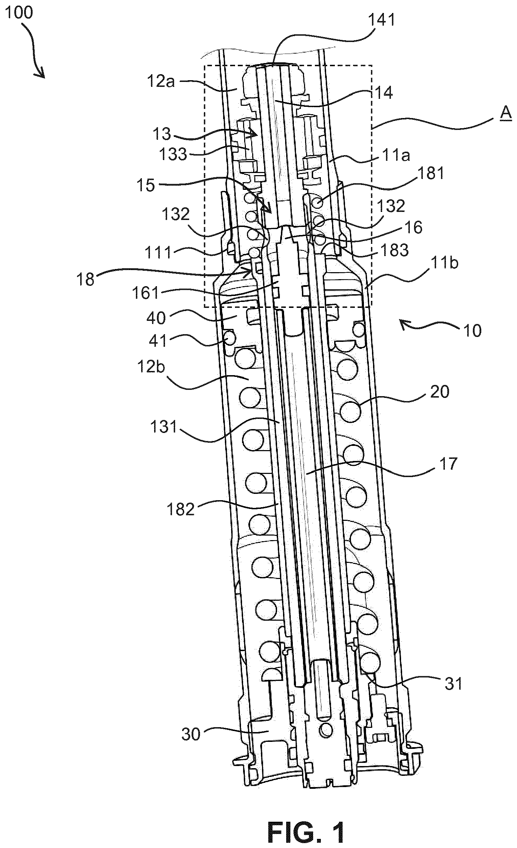

La figure 1 représente un dispositif de suspension 100 dit « classique » qui correspond à un premier mode de réalisation de l'invention, ledit dispositif de suspension combinant un amortisseur 10 hydraulique et un ressort 20 hélicoïdal entourant ledit amortisseur, le ressort et l'amortisseur étant coaxiaux.

L'amortisseur 10 représenté sur la figure 1 comporte un corps primaire 11a comprenant une cavité primaire 12a cylindrique dans laquelle coulisse un piston primaire 13, ledit piston primaire étant relié à une tige de piston 131 sortant de la cavité primaire 12 et se prolongeant dans une cavité secondaire 12b cylindrique plus large que ladite cavité primaire et délimité par un corps secondaire 11b. Les corps d'amortisseur, primaire 11a et secondaire 11b, sont fixés l'un à l'autre par emboitement, une partie extrémale du corps primaire 11a pénétrant dans une partie extrémale du corps secondaire 11b qui présente un diamètre adapté, l'ensemble étant immobilisé par des moyens d'encliquetage 111 par exemple.

Le piston primaire 13 est de manière connue pourvu de moyens calibrés 133 de passage d'un fluide, tel qu'une huile, entre les parties de la cavité primaire 12a séparées par ledit piston primaire, en fonction des mouvements de celui-ci générés par les efforts exercés sur la suspension.

Le corps primaire 11a est refermé du côté opposé de celui emboité dans le corps secondaire par des moyens non représentés, une chape adaptée et ses organes de fixation par exemple, pour solidariser l'amortisseur à un élément, suspendu ou non suspendu, du véhicule.

L'amortisseur 10 peut être monté de façon sensiblement verticale dans un sens ou dans l'autre en fonction de l'application.

La tige de piston 131 est reliée par une première extrémité au piston primaire 13 et par une seconde extrémité, opposée à la première, à des moyens de liaisons 30 solidaires d'une chape faisant partie d'un organe de liaison au train roulant du véhicule par exemple.

Le ressort 20, selon l'exemple illustré, est disposé à l'intérieur de la cavité secondaire 12b, coaxialement à celle-ci et à la tige de piston 131, entre une butée annulaire 31 solidaire des moyens de liaison 30 et un piston secondaire 40 qui coulisse dans la cavité secondaire 12b.

Le piston secondaire 40 est pourvu d'une bague d'étanchéité 41 qui isole la partie de la cavité secondaire contenant le ressort 20 d'une partie opposée qui communique avec la cavité primaire et est destinée à accueillir le fluide.

En effet, l'amortisseur 10, comporte au niveau du piston primaire 13, outre les moyens calibrés 133 de passage du fluide, un dispositif de décharge formé par un conduit 14 cylindrique traversant le piston primaire 13 et coaxiale à celui-ci, un système d'obturation 15, ou gicleur, et des orifices latéraux 132 réalisés dans la paroi de la tige de piston 131 au niveau du raccordement entre les cavités, primaire 12a et secondaire 12b.

Le conduit 14 cylindrique du dispositif de décharge débouche par un orifice axial 141 sur la cavité primaire 12a au niveau d'une extrémité libre, cet orifice permet au fluide de ladite cavité primaire de pénétrer dans ledit conduit pour ensuite atteindre le système d'obturation 15.

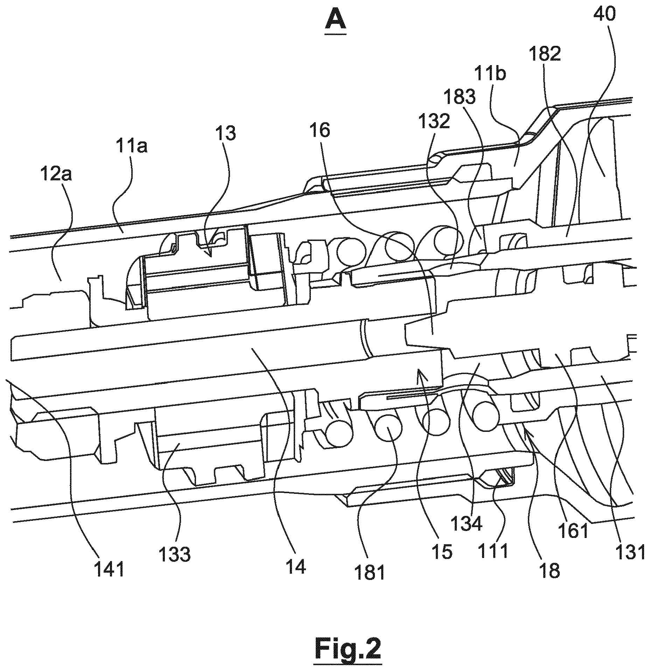

La figure 2, qui représente un détail de la figure 1, illustre principalement le dispositif de décharge avec une meilleure clarté, ledit dispositif permet au fluide issu d'une partie de la cavité primaire 12a, en amont du piston primaire 13, de transiter via le conduit 14 afin d'atteindre le système d'obturation 15.

Le système d'obturation 15 est obtenu par l'agencement du conduit 14, par son extrémité opposée à l'orifice axial 141, et d'un pointeau 16.

Le pointeau 16 vient s'insérer dans le conduit 14 et permet de régler le débit du fluide transitant en fonction de l'espacement laissé entre le pointeau et l'ouverture de l'orifice en raison de la tête conique du pointeau et du conduit cylindrique de conicité différente.

Le pointeau 16, selon l'exemple illustré sur les figures 1 et 2, comportes des collets annulaires 161 de guidage et d'étanchéité, un desdits collets délimitant un volume intérieur 134 dans la tige de piston 131, ladite tige de piston étant un tube dans lequel est placé le pointeau.

Le volume intérieur 134 situé entre le pointeau 16 et la tige de piston 131, communique avec une partie de la cavité primaire 12a située en aval du piston primaire 13 via les orifices latéraux 132, lesdits orifices latéraux permettent donc au fluide traversant le dispositif de décharge de remplir cette partie aval de la cavité primaire afin d'exercer une contrepression sur le piston primaire 13, ou simplement de limiter la pression exercée sur ledit piston primaire par le fluide comprimé dans la partie amont de la cavité primaire.

Ceci permettra un réglage essentiellement en basse vitesse comme décrit plus loin.

Cependant, afin de moduler l'ouverture du système d'obturation 15 en fonction d'un seuil déterminé de pression exercé par le fluide du conduit 14, et d'empêcher une ouverture totale dudit système quelque soit la pression du fluide, le pointeau 16 est maintenu dans une position fermée grâce à un gaz comprimé contenu dans un tube de commande 17 du pointeau, ledit tube de commande étant également placé à l'intérieur de la tige de piston 131.

Par conséquent, le pointeau 16 se déplace entre une première butée matérialisée par une extrémité du tube de commande 17 et une seconde butée matérialisée par une extrémité du conduit 14. La pression du gaz comprimé du tube de commande 17 ainsi que la pression du fluide du conduit 14 permettent de déterminer la course du pointeau 16, ou au moins les conditions dans lesquelles ledit pointeau se positionne entre les butées et donc de l'ouverture de celui-ci. De ce fait, la loi de débit du fluide traversant les orifices latéraux 132 peut être réglée en modifiant simplement la pression du gaz dans le tube de commande 17.

Ceci permet d'adapter le comportement du dispositif de suspension en basse vitesse, c'est-à-dire pour des chocs d'intensité limitée, en réglant un coefficient d'amortissement apparent qui ne correspond pas au coefficient d'amortissement propre du fluide utilisé mais à la valeur du débit du fluide transitant par le dispositif de décharge qui dépend directement de la course du pointeau. Par exemple, pour une pression de gaz empêchant l'ouverture du pointeau pour une pression de choc donnée, le fluide ne peut pas traverser le dispositif de décharge, le mouvement de pénétration du piston primaire dans la cavité primaire est donc rapidement stoppé, le choc est alors « mal amorti » car son énergie n'est pas bien dissipée. Mais pour que le pointeau ne s'ouvre pas, avec une pression de gaz usuelle, il faut que le choc soit infime, l'amortissement dans ces cas ne joue pas un rôle déterminant. Par contre, pour un choc d'intensité plus élevée conduisant à l'ouverture totale du pointeau, le débit de transit du fluide par le dispositif de décharge est maximal et facilite ainsi le coulissement du piston primaire dans la cavité primaire, le choc est donc « bien amorti » car son énergie est suffisamment dissipée.

Dès lors que l'intensité du choc ne permet plus au dispositif pointeau d'opérer un amortissement efficace, le choc est dit de grande énergie et donc de « grande vitesse », et un système de ressort auxiliaire 18 prend le relais.

Le système de ressort auxiliaire 18 permet un réglage de compression « haute vitesse » via un ressort 181 qui vient précharger le piston primaire par l'action d'une tige d'appui 182.

La tige d'appui 182 est disposée autour de la tige de piston 131 et comporte une surface d'appui 183 par laquelle ladite tige de commande comprime le ressort 181.

Le ressort 181 se comprime sous l'effet d'un choc quand le fluide de la cavité primaire 12a ne peut plus transiter par le dispositif de décharge à pointeau.

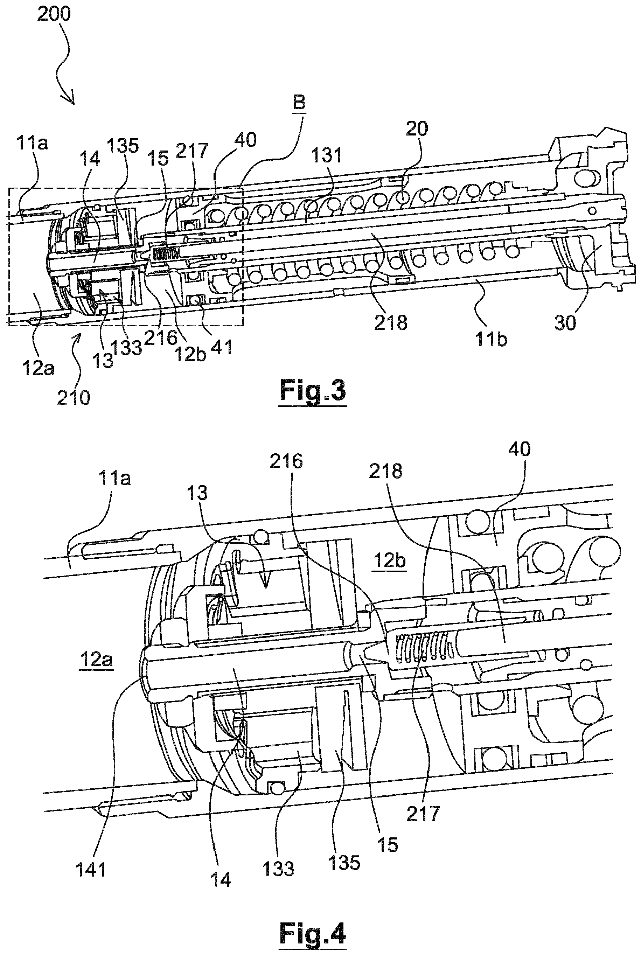

La figure 3 représente un dispositif de suspension 200 dit « développé » qui correspond à un deuxième mode de réalisation de l'invention, ledit dispositif de suspension combinant un amortisseur 210 hydraulique et un ressort 20 hélicoïdal entourant ledit amortisseur, le ressort et l'amortisseur étant coaxiaux.

Le dispositif de suspension évolué reprend globalement la même architecture que le dispositif classique du premier mode de réalisation, aux différences près qui seront détaillées dans ce qui suit.

Le piston primaire 13 coulisse dans la cavité secondaire 12b, le raccordement entre les cavités primaire et secondaire matérialise une butée pour ledit piston primaire.

Le piston primaire 13, outre ses moyens calibrés 133 de passage du fluide, comporte des clapets 135 permettant le réglage de la courbe hydraulique globale, et notamment le comportement à très hautes vitesses, de façon indépendante par rapport aux réglages contrairement au dispositif de suspension classique dans lequel le réglage « haute vitesse » interfère fortement avec la caractéristique du piston primaire.

Le dispositif de décharge de l'amortisseur 210, selon le mode de réalisation illustré sur la figure 3, comporte un pointeau 216 mobile et creux à l'intérieur duquel sont disposés un ressort 217 et une extrémité d'une tige de commande 218 pleine.

Ce dispositif de décharge permet un réglage « basse vitesse ». Le pointeau 216 est fermé en position statique et il s'ouvre lorsque le fluide transitant par le conduit 14 exerce sur lui une pression suffisante.

Le réglage agit sur la précharge du ressort 217 afin d'ajuster la charge d'ouverture du pointeau, et ainsi régler la sensibilité de l'amortisseur et par là-même du dispositif de suspension.

En ce qui est du réglage « grande vitesse », il faut agir sur la course d'ouverture du pointeau pour régler le débit maximum autorisé par le dispositif de décharge.

## Revendications

1. Dispositif de suspension (100, 200) de véhicule formé d'un amortisseur (10, 210) et d'un ressort hélicoïdal (20) montés en parallèle, l'amortisseur et le ressort étant coaxiaux, ledit amortisseur comportant au moins un corps (11a, 11b) délimitant au moins une cavité (12a, 12b) cylindrique dans laquelle coulisse un piston (13) solidaire d'une tige de piston (131), et un dispositif de décharge comprenant un conduit (14) traversant axialement ledit piston, un gicleur (15) à une extrémité dudit conduit et un pointeau (16, 216) pour limiter le débit à la sortie dudit gicleur, **caractérisé en ce que** des moyens élastiques agissent sur le pointeau pour maintenir le gicleur fermé en position statique, une force exercée par lesdits moyens élastiques étant déterminée pour que le pointeau s'ouvre quand un fluide traversant le conduit exerce une pression sur ledit pointeau, la course d'ouverture dudit pointeau étant fonction de la pression exercée par le fluide traversant le conduit.

2. Dispositif de suspension selon la revendication 1, dans lequel la tige de piston comporte au moins un orifice latéral (131) permettant au fluide provenant du gicleur (15) d'emplir une partie de la cavité (12a, 12b) en aval du piston (13) pour diminuer la pression dans une partie de ladite cavité en amont dudit piston.

3. Dispositif de suspension selon la revendication 1 ou 2, dans lequel le pointeau (16, 216) est soumis à un effort de compression de sens opposé à la pression du fluide provenant du conduit (14) et permettant de maintenir ledit pointeau en position fermée du gicleur en dessous d'un seuil de pression exercée par le fluide dudit conduit.

4. Dispositif de suspension selon la revendication 3, dans lequel l'effort de compression opposé à la pression du fluide du conduit (14) auquel est soumis le pointeau (16) est exercé par un gaz comprimé contenu dans un tube de commande (17) disposé à l'intérieur de la tige de piston (131).

5. Dispositif de suspension selon la revendication 3, dans lequel l'effort de compression opposé à la pression du fluide du conduit (14) auquel est soumis le pointeau (216) est exercé par un ressort (217) agencé pour comprimer ledit pointeau entre une tige de commande (218) et le gicleur (15).

6. Dispositif de suspension selon l'une quelconque des revendications précédentes, dans lequel l'amortisseur (10, 210) comporte un système de ressort auxiliaire (18) permettant d'augmenter la sensibilité dudit amortisseur au delà d'une sensibilité maximale obtenue par le dispositif de décharge seul, ledit système de ressort auxiliaire comportant un ressort de compression (181) disposé entre le piston (13) et une tige d'appui (182) creuse entourant la tige de piston (131), ledit ressort de compression et ladite tige d'appui étant coaxiaux à ladite tige de piston.

7. Dispositif de suspension selon l'une quelconque des revendications précédentes, dans lequel le piston (13) comporte des moyens calibrés (133) de passage du fluide entre les deux parties de la cavité (12a, 12b) séparées par ledit piston, et des clapets (135) qui ferment et ouvrent lesdits moyens calibrés en fonction des pressions dans lesdites deux parties de la cavité.

8. Dispositif de suspension selon l'une quelconque des revendications précédentes, dans lequel l'amortisseur (10, 210) est un amortisseur hydraulique.
